# EUROPÄISCHE PATENTSCHRIFT

(11) **EP 2 232 090 B1**
(45) Veröffentlichungstag und Bekanntmachung des Hinweises auf die Patenterteilung: **28.11.2012**
(21) Anmeldenummer: 09700621.7
(22) Anmeldetag: 12.01.2009
(51) Int. Cl.: F16C 13/02, F16C 23/04, B21B 31/07

(54) **LAGERANORDNUNG**
BEARING ARRANGEMENT
DISPOSITIF À PALIER

(30) Priorität: 11.01.2008 DE 102008004113
(43) Veröffentlichungstag der Anmeldung: 29.09.2010
(73) Patentinhaber: SMS Siemag AG, 40237 Düsseldorf (DE)
(72) Erfinder: KELLER, Karl, 57271 Hilchenbach (DE); ROEINGH, Konrad, 57271 Hilchanbach (DE)
(74) Vertreter: Klüppel, Walter
(86) Internationale Anmeldenummer: PCT/EP2009/000115
(87) Internationale Veröffentlichungsnummer: WO 2009/087114

(56) Entgegenhaltungen:
- GB-A- 1 380 947

## Beschreibung

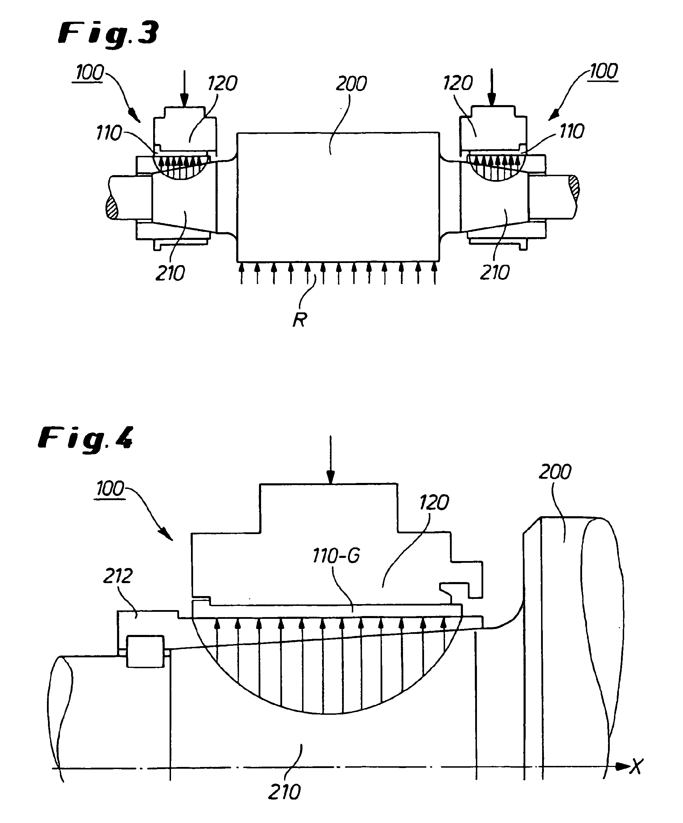

Beim Walzen flacher und breiter Metallbänder oder auch beim Walzen von Metallprofilen treten zunehmend größere Walzkräfte auf, die von Lageranordnungen aufgenommen werden müssen. Im Stand der Technik bekannte Lageranordnungen 100 sind gemäß Figur 3 und Figur 4 so aufgebaut, dass ein Lager 110, z. B. ein Gleitlager 110-G oder ein Wälzlager in einer ideal zylindrischen Bohrung eines sehr steif gestalteten Lagerstützkörpers 120, dass heißt eines so genannten Lagereinbaustücks aufgenommen wird. Die Arbeits- oder Stützwalzen 200 zum Walzen der besagten Metallbänder oder -Profile sind jeweils an ihren Enden mit ihren Zapfen 210 in solchen Lagern 110 unterstützt. In den Figuren 3 und 4 ist veranschaulicht, wie die Reactio R der Walzkräfte (vom Walzgut auf die Walze 200 wirkend) auf die beidseitigen Lageranordnungen aufgeteilt wird, um von diesen aufgefangen zu werden.

Ein Gleitlager in Form einer Lagerbuchse oder ein Außenring eines Wälzlagers, sind traditionell geometrisch zwar sehr genau hergestellt, jedoch wegen des nur begrenzt vorhandenen Bauraumes besitzen sie kaum eigene Steifigkeit. Sie benötigen daher eine gute Unterstützung, die über ihre Breite, das heißt in Richtung der Längsachse des Zapfens, möglichst gleich verteilt sein muss. Idealerweise würde eine solche gleichförmige Unterstützung durch einen über die Breite des Lagers gleichförmig steifen Lagerstützkörper bzw. ein gleichförmig steifes Einbaustück gewährleistet.

Verschiedene Anforderungen an die Einbaustücke und/oder die Lagerungsart der Walzen verhindern jedoch in der Praxis eine gleichförmig steife Ausbildung der Lagerstützkörper bzw. der Einbaustücke über ihrer gesamten Breite. Deshalb sind in der Praxis die Lagerstützkörper mit in Richtung ihrer Längsachse lokal ausgeprägten Tragzonen ausgebildet, so dass sich die Lagerstützkörper - auch bei gleichförmiger Belastung - über die Breite des Lagersitzes sehr ungleichmäßig verformen. Eine ungleichförmige Verformung des Lagerstützkörpers kann auch bei einer gleichförmig steifen Ausbildung des Lagerstützkörpers eintreten, wenn die Belastung nicht gleichförmig, z.B. parabolisch verteilt ist.

Eine ungleichmäßige Verformung wirkt sich in jedem Fall schädlich auf die Tragfähigkeit der Lageranordnung und somit auf deren Lebensdauer aus, da es zu unerwünschten Lastkonzentrationen, das heißt einzelnen Bereichen mit Überlast im Lager kommt.

So ist in der Druckschrift GB 1 380 947 eine einstellbare Gleitlagerung beschrieben, für mit Neigungen und Krümmungen versehene Wellen großer Belastungen in Walzwerken. Dabei ist entweder die äußere Mantelfläche einer Lagerbuchse oder die innere Mantelfläche eines Lagergehäuses ballig, keilförmig oder stufenförmig ausgebildet.

Ausgehend von dem zuvor beschriebenen Stand der Technik liegt der Erfindung die Aufgabe zugrunde, eine bekannte Lageranordnung, bei der das Auftreten von Bereichen mit lokaler Überlast über der Breite der Lageranordnung vermieden wird, dahingehend weiter zu bilden, dass die Fertigung des Lagerstützkörpers mit der Bohrung vereinfacht wird.

Diese Aufgabe wird durch den Gegenstand des Anspruchs 1 gelöst. Demnach ist eine erfindungsgemäße Lageranordnung dadurch gekennzeichnet, dass die Bohrung in dem Lagerstützkörper in Form abschnittsweise aufeinander folgender - vorzugsweise gradlinig konturierter - konischer Bohrungen gefertigt ist.

Die unter Last zu erwartende Verformungskurve des Lagerstützkörpers, d.h. insbesondere die unter Last zu erwartende Kontur der Bohrung des Lagerstützkörpers, lässt sich heute mit Finite-Elemente-Methoden FEM-Analysen sehr genau vorausberechnen. Sie ist abhängig von der Verteilung der auftretenden Belastung und der Verteilung der Steifigkeit des Lagerstützkörpers, z.B. jeweils in Richtung der Längsachse der Bohrung gesehen. Erfindungsgemäß wird deshalb vorgeschlagen, eine derart berechnete Verformungskurve ganz oder teilweise, zum Beispiel 50 - 90 % der Verformung unter voller Last, als negative, negierte bzw. komplementäre Kontur der Bohrung eines Lagerstützkörpers in unbelastetem Zustand zuzuordnen, um auf diese Weise die Verformung des Lagerstützkörpers unter Last zumindest teilweise kompensieren zu können. Die erfolgreiche Kompensation zeigt sich im Betrieb, das heißt unter Last, insbesondere dadurch, dass im Lager keine unerwünschten Stellen mit lokaler Überlast auftreten.

Gemäß einem ersten Ausführungsbeispiel der Erfindung ist die Bohrung in dem unbelasteten Lagerstützkörper gegenüber ihrer eigenen Längsachse, welche identisch ist mit der Längsachse des Lagerstützkörpers, rotationssymmetrisch konvex ausgebildet. Diese konvexe Ausbildung der Bohrung, das heißt die konkave Ausbildung des Lagerstützkörpers auf seiner Innenseite, empfiehlt sich insbesondere dann, wenn an den Rändern des Lagerstützkörpers eine größere Krafteinwirkung von dem Walzenzapfen über das Lager auf den Lagerstützkörper erwartet wird, als in der Mitte des Lagerstützkörpers. Diese Kraftverteilung würde ein Anheben der Ränder des Lagerstützkörpers gegenüber dessen Mitte bewirken. Eine gleichartige Deformation des Lagerstützkörpers und damit der Bohrung könnte bei gleichförmiger Krafteinwirkung zum Beispiel auch dadurch entstehen, dass das Material des Lagerstützkörpers - über dessen Breite gesehen - an seinen Rändern weicher ist als in der Mitte.

Alternativ kann die Bohrung in dem unbelasteten Lagerstützkörper gegenüber ihrer Längsachse auch rotationssymmetrisch konkav ausgebildet sein. Das heißt der Lagerstützkörper ist auf seiner Innenseite konvex ausgebildet. Eine konkave Ausbildung der Bohrung über seiner Breite empfiehlt sich dann, wenn auf Höhe der halben Breite des Lagerstützkörpers eine wesentlich größere radiale Krafteinwirkung von dem Walzenzapfen über das Lager auf den Lagerstützkörper zu erwarten ist, als an den Rändern der Bohrung bzw. des Lagerstützkörpers. Diese Kraftverteilung würde ein Anheben der Mitte des Lagerstützkörpers gegenüber dessen Rändern bewirken. Eine gleichartige Deformation des Lagerstützkörpers und damit der Bohrung könnte bei gleichförmiger Krafteinwirkung zum Beispiel auch dadurch entstehen, dass das Material des Lagerstützkörpers - über dessen Breite gesehen - in der Mitte weicher ist als an seinen Rändern.

Das Lager kann zum Beispiel in Form eines Gleitlagers oder eines Wälzlagers ausgebildet sein.

Bei Ausbildung des Lagers als Gleitlager in Form einer zylindrischen Lagerbuchse zeigt sich eine erfindungsgemäß erfolgreiche Kompensation der Verformung des Lagerstützkörpers im Betrieb, das heißt unter Last, vorteilhafterweise dadurch, dass im Übergangsbereich zwischen der Lagerbuchse und dem Walzenzapfen - möglichst über die gesamte Tiefe/Breite der Bohrung - ein Schmierspalt mit einer gleichförmigen Dicke ausgebildet ist.

Bei Ausbildung des Lagers als Wälzlager umfasst das Lager einen Außenring, welcher von der Bohrung in dem Lagerstützkörper aufgenommen ist, einen Innenring, welcher auf dem Walzenzapfen oder der Zapfenbuchse sitzt, und Wälzkörper zwischen dem Außenring und dem Innenring. Eine erfindungsgemäß erfolgreiche Kompensation der Verformung des Lagerstützkörpers zeigt sich im Betrieb, das heißt unter Last, vorteilhafterweise dadurch, dass sich der Innenring und der Außenring als Funktionsflächen über ihrer gesamten Breite bzw. über der gesamten Breite der Bohrung in dem Lagerstützkörper gleichförmig koaxial bzw. parallel gegenüber stehen. Es gibt dann keine unerwünschte lokale Überlast.

Der Lagerstützkörper repräsentiert typischerweise das Gehäuse für das Lager in Form eines Lagereinbaustücks. Er verbindet typischerweise die Walze mit dem Walzgerüst.

Die Erfindung betrifft Lageranordnungen für beidseitig gelagerte Walzen mit einem Längen/Durchmesser-Verhältnis (UD-Verhältnis) von 65 - 100 %.

Der Beschreibung sind vier Figuren beigefügt, wobei
- Figur 1a: eine erfindungsgemäße Lageranordnung gemäß einem ersten Ausführungsbeispiel mit konvexer Bohrung im Lagerstützkörper in unbelastetem Zustand;
- Figur 1b: die Lageranordnung nach Figur 1 a in belastetem Zustand;
- Figur 2a: eine erfindungsgemäße Lageranordnung gemäß einem zweiten Ausführungsbeispiel mit konkaver Bohrung in dem Lagerstützkörper in unbelastetem Zustand;
- Figur 2b: die Lageranordnung nach Figur 2a in belastetem Zustand;
- Figur 3: eine Walze mit beidseitiger Lagerung (Stand der Technik); und
- Figur 4: eine Detailansicht von Figur 3 betreffend die Lageranordnung (Stand der Technik)
zeigt.

Die Erfindung wird nachfolgend unter Bezugnahme auf die genannten Figuren detailliert beschrieben. In allen Figuren sind gleiche technische Merkmale mit gleichen Bezugszeichen bezeichnet.

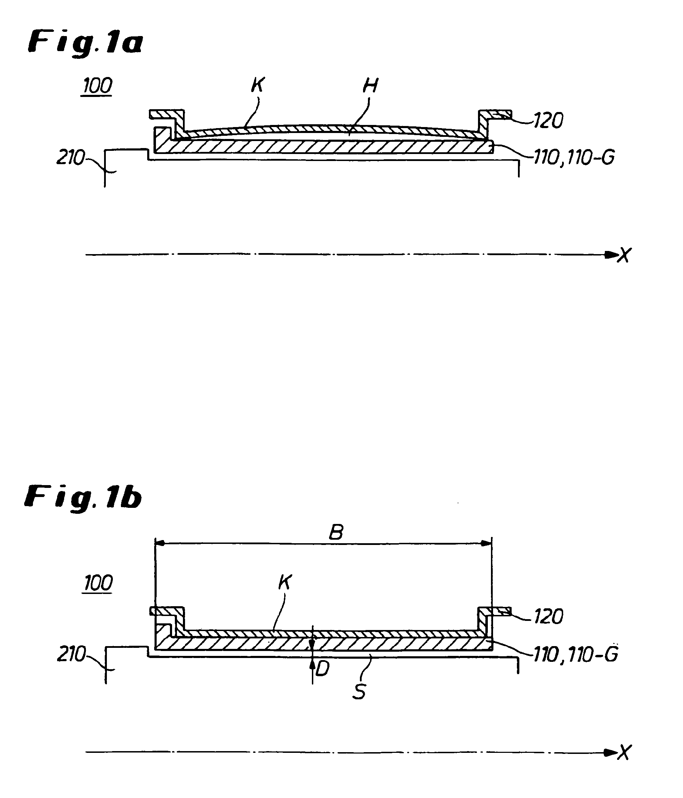

Figur 1 a zeigt ein erstes Ausführungsbeispiel für die erfindungsgemäße Lageranordnung mit einer konvexen Kontur K der Bohrung in dem Lagerstützkörper 120 in unbelastetem Zustand. Anders ausgedrückt: der Lagerstützkörper ist konkav ausgebildet. Das Lager ist bei dem in Figur 1 a gezeigten ersten Ausführungsbeispiel in Form eines Gleitlagers ausgebildet, wobei das Bezugzeichen 110-G den Gleitkörper in Form einer Lagerbuchse zwischen dem Stützkörper 120 und dem Zapfen 210 - bzw. einer Zapfenbuchse 210 bei konischem Zapfen einer gelagerten Walze, zeigt. Die konvexe Ausbildung der Bohrung in dem Lagerstützkörper zeigt sich in Figur 1a durch den gewölbten Hohlraum H zwischen dem unbelasteten Lagerstützkörper 120 und dem Gleitkörper 110-G.

Figur 1b zeigt die Lageranordnung aus Figur 1 a in belastetem Zustand. Die Belastung erfolgt typischerweise durch eine radiale Krafteinwirkung von dem Walzenzapfen über das Lager auf den Lagerstützkörper. Die in dem ersten Ausführungsbeispiel gezeigte konvexe Ausbildung der Bohrung in dem Lagerstützkörper empfiehlt sich insbesondere dann, wenn im Bereich der halben Breite B des Lagerstützkörpers mit einer geringeren radialen Krafteinwirkung zu rechnen ist als an dessen Rändern. Die konvexere Ausbildung der Bohrung empfiehlt sich auch dann, wenn das Material an den Rändern des Lagerstützkörpers weicher, das heißt weniger steif ausgebildet ist, als im Bereich der Mitte der Breite.

Wie in Figur 1b zu erkennen ist, ist der gewölbte Hohlraum zwischen dem Lagerstützkörper 120 und dem Lagergleitkörper 110-G nunmehr unter Last verschwunden. Vorteilhafterweise hat die besagte Deformation des Lagerstützkörpers unter Last - wie in Figur 1b gezeigt - keine negative Auswirkung auf die Gestalt des Schmierspaltes S, insbesondere nicht zu einer lokalen Verengung des Schmierspaltes im Bereich der halben Breite B des Lagerstützkörpers geführt. Dieser ist auch unter Last zylinderförmig ausgebildet mit gleichmäßiger Dickenverteilung D über der gesamten Breite B des Lagerstützkörpers.

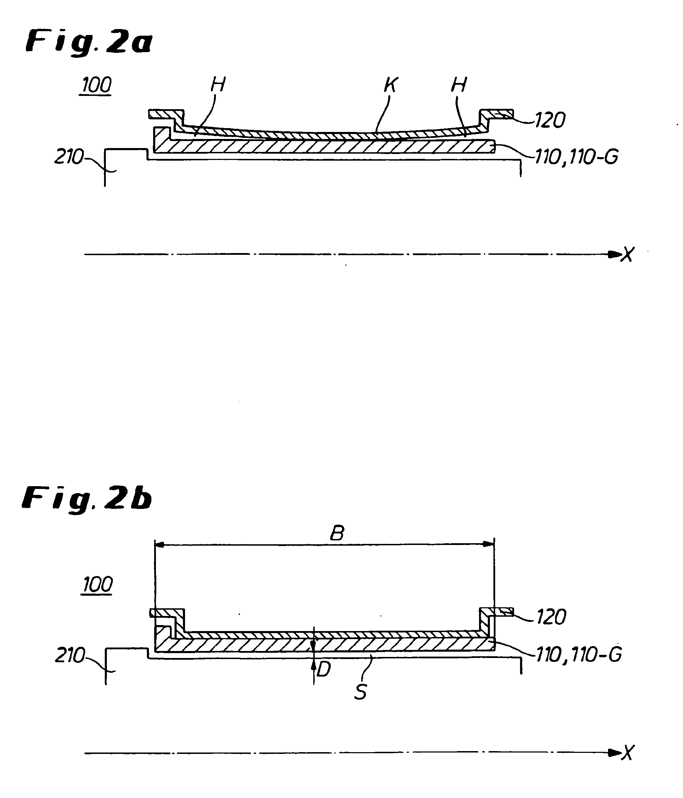

Die Figuren 2a und 2b zeigen ein zweites Ausführungsbeispiel der Erfindung, wonach die Bohrung in dem Lagerstützkörper konkav, das heißt der Lagerstützkörper selber konvex ausgebildet ist. Eine derartige konkave Ausgestaltung der Bohrung empfiehlt sich insbesondere dann, wenn an den Rändern des Lagerstützkörpers eine geringere Krafteinwirkung zu erwarten ist als in dessen Mitte oder wenn das Material des Lagerstützkörpers an dessen Rändern härter, das heißt weniger nachgiebig ist als in seiner Mitte, das heißt auf halber Höhe seiner Breite B.

Figur 2a zeigt die konkave Ausbildung der Bohrung in dem Lagerstützkörper 120 in unbelastetem Zustand. Die konkave Ausbildung zeigt sich in Form von konisch auf die Mitte bzw. halbe Breite B des Lagerstützkörpers 120 zulaufenden Hohlräumen H.

Anders als Figur 2a zeigt Figur 2b die erfindungsgemäße Lageranordnung gemäß dem zweiten Ausführungsbeispiel in belastetem Zustand. Die Hohlräume H zwischen dem Gleitkörper 110-G und der Kontur K des Lagerstützkörpers 120 sind verschwunden aufgrund einer durch die Krafteinwirkung bedingten Deformation des Lagerstützkörpers 120. Vorteilhafterweise hat diese Deformation dieses Lagerstützkörpers unter Last keine negative Auswirkung auf die Gestalt des Schmierspalts; vergleiche Figur 2b. Dieser bleibt vorteilhafterweise über der gesamten Breite B des Lagerstützkörpers mit gleichmäßiger Dickenverteilung erhalten.

Für beide Ausführungsbeispiele gemäß den Figuren 1 und 2 gilt: Die auftretende Belastung der Lageranordnung wird gegebenenfalls vollständig durch eine geeignete Deformation des Lagerstützkörpers und die damit einhergehende komplementäre Deformation der Bohrung kompensiert, welche erfindungsgemäß keine negativen Auswirkungen auf die Form des Schmierspaltes S hat. Deshalb wird durch die erfindungsgemäße Ausbildung der Bohrung in dem unbelasteten Lagerstützkörper eine unerwünschte lokale Überlast in dem Lager vermieden.

## Patentansprüche

1. Lageranordnung (100), welche aufweist:
ein Lager (110) zum drehbaren Lagern des Zapfens (210) einer Walze (200) in einem Walzgerüst; und
einen Lagerstützkörper (120) mit einer Bohrung zur Aufnahme des Lagers,
wobei die Kontur (K) der Bohrung in dem unbelasteten Lagerstützkörper zumindest näherungsweise entsprechend der negierten Kontur der Bohrung bei einer vorausberechneten Belastung des Lagerstützkörpers ausgebildet ist,
**dadurch gekennzeichnet,**
**dass** die Bohrung in dem Lagerstützkörper (120) in Form abschnittsweise aufeinander folgender- vorzugsweise gradlinig konturierter- konischer Bohrungen gefertigt ist

2. Lageranordnung (100) nach Anspruch 1,
**dadurch gekennzeichnet,**
**dass** die Bohrung in dem unbelasteten Lagerstützkörper rotationssymmetrisch konvex ausgebildet ist.

3. Lageranordnung (100) nach Anspruch 1,
**dadurch gekennzeichnet,**
**dass** die Bohrung in dem unbelasteten Lagerstützkörper rotationssymmetrisch konkav ausgebildet ist.

4. Lageranordnung (100) nach einem der vorangegangenen Ansprüche,
**dadurch gekennzeichnet,**
**dass** das Lager (110) als Gleitlager (110-G) in Form einer Lagerbuchse zum drehbaren Lagern des Zapfens (210) der Walze (200) ausgebildet ist, wobei zwischen der Lagerbuchse und dem Zapfen der Walze ein zylinderförmiger Schmierspalt (S) ausgebildet ist.

5. Lageranordnung (100) nach einem der Ansprüche 1 bis 4,
**dadurch gekennzeichnet,**
**dass** das Lager (110) in Form eines Wälzlagers zum drehbaren Lagern des Zapfens (210) der Walze ausgebildet ist.

6. Lageranordnung (100) nach einem der vorangegangenen Ansprüche,
**dadurch gekennzeichnet,**
**dass** der Lagerstützkörper (120) das Gehäuse für das Lager in Form eines Lagereinbaustücks repräsentiert, welches mit dem Walzgerüst verbunden ist

## Claims

1. Bearing arrangement (100) comprising:
a bearing (110) for rotatable mounting of the pin (210) of a roll (200) in a roll stand; and a bearing support body (120) with a bore for receiving the bearing,
wherein the contour (K) of the bore in the unloaded bearing support body is formed at least approximately in correspondence with the negated contour of the bore in the case of a precalculated loading of the bearing support body,
**characterised in that** the bore in the bearing support body (120) is made in the form of conical bores, preferably rectilinearly contoured, successive in sections.

2. Bearing arrangement (100) according to claim 1, **characterised in that** the bore in the unloaded bearing support body is formed with rotationally symmetrical convexity.

3. Bearing arrangement (100) according to claim 1, **characterised in that** the bore in the unloaded bearing support body is formed with rotationally symmetrical concavity.

4. Bearing arrangement (100) according to any one of the preceding claims, **characterised in that** the bearing (110) is constructed as a slide bearing (110-G) in the form of a bearing bush for rotatable mounting of the pin (210) of the roller (200), wherein a cylindrical lubrication gap (S) is formed between the bearing bush and the pin of the roll.

5. Bearing arrangement (100) according to any one of claims 1 to 4, **characterised in that** the bearing (110) is constructed in the form of a roller bearing for rotatable mounting of the pin (210) of the roll.

6. Bearing arrangement (100) according to any one of the preceding claims, **characterised in that** the bearing support body (120) represents the housing for the bearing in the form of a bearing chock which is connected with the roll stand.

## Revendications

1. Arrangement de palier (100), qui présente :
un palier (110) pour le logement rotatif du tourillon (210) d'un cylindre (200) dans une cage de laminage ; et
un corps support (120) de palier présentant un trou destiné à recevoir le palier,
le contour (K) du trou dans le corps support de palier non sollicité étant réalisé, de manière au moins approximative, conformément au contour négatif du trou à une sollicitation calculée au préalable du corps support de palier, **caractérisé en ce que** le trou dans le corps support (120) de palier est réalisé sous forme de trous coniques - de préférence à contour linéaire successifs par section.

2. Arrangement de palier (100) selon la revendication 1, **caractérisé**
**en ce que** le trou est réalisé de manière convexe à symétrie de rotation dans le corps support de palier non sollicité.

3. Arrangement de palier (100) selon la revendication 1, **caractérisé**
**en ce que** le trou est réalisé de manière concave à symétrie de rotation dans le corps support de palier non sollicité.

4. Arrangement de palier (100) selon l'une quelconque des revendications précédentes, **caractérisé**
**en ce que** le palier (110) est réalisé en tant que palier de glissement (110-G) sous forme d'un coussinet de palier pour le logement rotatif du tourillon (210) du cylindre (200), une fente de lubrification (S) cylindrique étant formée entre le coussinet de palier et le tourillon du cylindre.

5. Arrangement de palier (100) selon l'une quelconque des revendications 1 à 4, **caractérisé**
**en ce que** le palier (110) est réalisé sous forme d'un palier de laminage pour le logement rotatif du tourillon (210) du cylindre.

6. Arrangement de palier (100) selon l'une quelconque des revendications précédentes, **caractérisé**
**en ce que** le corps support (120) de palier représente le logement du palier sous forme d'une empoise, qui est reliée à la cage de laminage.
